(19) Europäisches Patentamt
European Patent Office
Office européen des brevets

(11) **EP 3 483 774 B1**

(12) **EUROPÄISCHE PATENTSCHRIFT**

(45) Veröffentlichungstag und Bekanntmachung des Hinweises auf die Patenterteilung:
**29.12.2021   Patentblatt 2021/52**

(51) Int Cl.:
***G06K 7/00*** *(2006.01)*        ***G06K 7/10*** *(2006.01)*

(21) Anmeldenummer: **18204514.6**

(22) Anmeldetag: **06.11.2018**

(54) **REGAL ODER SCHRANK MIT WENIGSTENS ZWEI ABLAGEBÖDEN SOWIE EINE REGAL- ODER SCHRANKANORDNUNG MIT WENIGSTENS ZWEI REGALEN ODER SCHRÄNKEN**

SHELF OR CUPBOARD WITH AT LEAST TWO DEPOSITING BASES AND A SHELF OR CUPBOARD ASSEMBLY WITH AT LEAST TWO SHELVES OR CUPBOARDS

ÉTAGÈRE OU ARMOIRE DOTÉE D'AU MOINS DEUX CLAYETTES AINSI QU'ENSEMBLE D'ÉTAGÈRE OU D'ARMOIRE DOTÉ D'AU MOINS DEUX ÉTAGÈRES OU ARMOIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2017   EP 17201178**

(43) Veröffentlichungstag der Anmeldung:
**15.05.2019   Patentblatt 2019/20**

(73) Patentinhaber: **Feig Electronic GmbH**
**35781 Weilburg (DE)**

(72) Erfinder: **Meißner, Wolfgang**
**65599 Dornburg (DE)**

(74) Vertreter: **Knefel, Cordula**
**Wertherstrasse 16**
**35578 Wetzlar (DE)**

(56) Entgegenhaltungen:
**DE-A1-102004 050 089      DE-U1-202016 103 887**
**US-A1- 2006 232 382      US-A1- 2012 056 720**
**US-A1- 2015 235 066**

**Beschreibung**

Die Erfindung betrifft ein Regal mit wenigstens zwei Ablageböden sowie eine Regal- oder Schrankanordnung mit wenigstens zwei Regalen oder Schränken.

Die Erfindung betrifft insbesondere ein Regal oder einen Schrank, welche ein RFID-System zur kontaktlosen Datenübertragung beinhalten, insbesondere zum Lesen so genannter passiver RFID-Transponder (kontaktlose Datenträger) in einem Regal oder einem Schrank mit wenigstens zwei Ablageböden.

Ein RFID-System besteht gemäß dem Stand der Technik aus einer RFID-Antenne, die sich aus mindestens einer Antennenschleife, die eine Induktivität darstellt, und aus einer oder mehreren Windungen gebildet wird, und einer Anpassschaltung zusammensetzt, einer Schreib-/Lesestation mit integrierter Sende-, Empfänger- und Steuereinheit und einer Verbindungsleitung zwischen der Schreib-/Lesestation und der RFID-Antenne.

Die RFID-Antenne eines RFID-Systems hat folgende Aufgaben: Einerseits die Übertragung von Energie an den Transponder und andererseits die Übertragung von Daten an und vom Transponder. Die Energie- und Datenübertragung basiert auf der magnetischen Kopplung der Wechselfelder des Readers und des Transponders im Nahbereich der Antenne.

Eine Anforderung an eine RFID-Reader-Antenne ist die Energieübertragung zum Transponder. Dazu wird die Reader-Antenne ihrerseits durch einen Sender mit Energie versorgt. Um die Leistung optimal von der Endstufe des Readers in die Antenne zu übertragen, müssen Reader-Endstufe, Verbindungskabel und Reader-Antenne den gleichen Eingangs- beziehungsweise Ausgangswiderstand besitzen. Eine RFID-Reader-Antenne benötigt also eine bestimmte Eingangsimpedanz, damit die Energie von der Reader-Endstufe optimal zur Antenne übertragen wird.

Ferner muss die Reader-Antenne möglichst gut auf die Betriebsfrequenz des RFID-Systems abgestimmt sein, um einen hohen Strom und damit eine hohe magnetische Feldstärke zu erzielen.

Die Resonanzfrequenz der Reader-Antenne ist auf die Betriebsfrequenz des RFID-Systems abgestimmt. Hierdurch erreicht man mit einer hohen Güte der Reader-Antenne eine hohe Energieübertragung.

Zur Anpassung des Eingangs- beziehungsweise Ausgangswiderstandes und zum Abgleich der Reader-Antenne auf die Betriebsfrequenz dient eine Anpassschaltung, die sich in der Regel in unmittelbarer Nähe zur Antennenschleife befindet.

Transponder bestehen aus einem integrierten Mikroelektronikbauelement (IC) und einem Resonanzkondensator und einer Antennenspule, wobei der Resonanzkondensator häufig bereits in das Mikroelektronikbauelement integriert ist. Die Antennenspule und der Resonanzkondensator bilden einen elektrischen Schwingkreis und werden auf ihre Betriebsfrequenz von zum Beispiel 13,56 Megahertz (MHz) abgestimmt.

Gelangt ein Transponder in den Erfassungsbereich der Reader-Antenne, so erhält der Transponder über die magnetische Kopplung mit der Antenne Energie zum Betrieb der integrierten Schaltung (IC). Die Höhe der Energie ist abhängig von der Feldstärke beziehungsweise Anzahl der Feldlinien, die den Transponder durchdringen, und dem Winkel der Feldlinien zum Transponder. Die maximale Energie erhält der Transponder bei einem Winkel zwischen Feldlinien und Transponder von 90°. Ist der Winkel zwischen Feldlinien und Transponder sehr spitz oder sogar 0°, so wird der Transponder von keinen Feldlinien durchdrungen und erhält somit auch keine Energie.

Ist die Energie groß genug, wird das Mikroelektronikbauelement in den Grundzustand versetzt und beginnt zu arbeiten.

Der Bereich, in dem der Transponder ausreichend mit Energie versorgt wird und mit dem RFID-System kommunizieren kann, wird Erfassungsbereich genannt.

Die Größe des Erfassungsbereiches wird durch die Faktoren Antennenfläche, Antennenform und Strom in der Antennenschleife (Antennenstrom) bestimmt. Der Strom ist wiederum abhängig von der Güte des Schwingkreises, der Ausgangsleistung des RFID-Readers und der Induktivität der Antennenschleife und erreicht sein Maximum, wenn die Antenne auf Resonanzfrequenz abgestimmt ist.

Um einen möglichst großen Erfassungsbereich zu erzielen, müsste man folglich eine möglichst große Antennenfläche mit einem möglichst großen Antennenstrom betreiben. In der Praxis ist dies aber durch verschiedene Einschränkungen begrenzt.

Einerseits ist die Ausgangsleistung der Endstufenverstärker der RFID-Reader begrenzt, um den Aufwand möglichst gering zu halten. Auch die Erwärmung der Antenne oder der Anpassschaltung sowie die hohen Spannungen an den Bauteilen im Resonanzkreis erschweren das Design und die Entwicklung kostengünstiger Lösungen bei großen Sendeleistungen.

Die Abhängigkeit der magnetischen Feldstärke von dem Strom und der Größe der Antenne kann anhand der folgenden Formel für eine runde Antenne prinzipiell dargestellt werden:

$$H(x) = \frac{I \cdot N \cdot r^2}{2(r^2 + x^2)^{3/2}}$$

H:  magnetische Feldstärke
x:  Abstand zwischen der Ebene der Antenne und dem Transponder
I:  Strom durch die Antenne
N:  Anzahl der Windungen der Antenne
r:  Radius der runden Antenne.

Wählt man den Abstand x zwischen Transponder und Antennenschleife gleich Null (Transponder liegt in derselben Ebene wie die Antennenschleife), kann die Formel folgendermaßen vereinfacht werden:

$$H(x) = \frac{I \cdot N}{2r}$$

Die Formel zeigt, dass die Feldstärke in der Antennenmitte mit 1/r abnimmt. Geht man davon aus, dass der RFID-Reader in der Lage ist, nur einen bestimmten maximalen Strom in eine Antennenanordnung hineinzubringen, so wird deutlich, dass ab einer bestimmten Größe der Antenne die magnetische Feldstärke in der Mitte der Antenne nicht mehr ausreichend ist, um einen Transponder zu betreiben.

Andererseits wird die Induktivität abhängig von der Leiterlänge beziehungsweise der vom Leiter umschlossenen Fläche für große Antennen immer größer. Besonders bei höheren Frequenzen (zum Beispiel bei 13,56 MHz) ergeben sich nach der folgenden Gleichung sehr kleine Kapazitäten, die zum Abgleich der Antenne auf die geforderte Resonanzfrequenz notwendig würden.

Die Berechnung der Resonanzfrequenz kann anhand folgender Formel erfolgen:

$$f_{res} = \frac{1}{2\pi\sqrt{L \cdot C}}$$

f:   Frequenz
L:   Induktivität
C:   Kapazität.

Diese kleinen Kapazitäten im Resonanzkreis machen die Antennen in der Praxis schwer abgleichbar, und die Empfindlichkeit gegen Änderungen in den Umgebungsbedingungen wird größer.

RFID-Transponder (radio frequency identification) sind Idenfikationsetiketten, welche per Funk identifiziert werden können. In den RFID-Transpondern sind die je nach Anwendung erforderlichen Daten gespeichert.

Aus der Praxis ist bekannt, unter anderem in der Lagerhaltung zunehmend Waren mit RFID-Transpondern zu versehen, um beispielsweise die Anzahl der Waren im Regalsystem, die Anwesenheit und Position der Waren im Regalsystem und/oder den Transportweg der Waren einer Handelskette verfolgen zu können.

In dem Anwendungsbereich von Bibliotheken ist es aus der Praxis bekannt, jeweils ein Buch mit einem Etikett zu versehen, das beispielsweise Angaben zu Buchnummer, Position sowie Status "entliehen" oder "verfügbar", Titel, Autor, Auflage, Verlag usw. enthalten kann. Die erfassten Daten werden in einer Datenbank gespeichert und können von den Mitarbeitern der Bibliothek abgerufen werden. Auch das Ein- oder Ausbuchen kann über so genannte Selbstverbucher erfolgen, die aus einer RFID-Schreib-/Leseeinheit mit Antenne und einem Bibliothekencomputer bestehen.

RFID-Schreib-/Lesestationen sind üblicherweise nur mit einem Sende- und Empfangskanal ausgestattet. In RFID-Regalen sind oft mehrere RFID-Antennen in den Regalboden eingebaut, wobei ein Regal üblicherweise aus mehreren Regalböden besteht. Dies führt zu dem Problem, dass die Verknüpfung dieser zahlreichen Antennen in der Regel über einen Multiplexer zu erfolgen hat. Jede RFID-Antenne muss in der Regel mit mindestens einem Hochfrequenzkabel mit der Schreib-/Leseeinheit verbunden werden. Durch die Verbindungen mit den Multiplexern zwischen Schreib-/Leseeinheit und Antenne entsteht eine Baumstruktur. Die Multiplexer benötigen zusätzlich eine Spannungsversorgung und üblicherweise Steuersignale, die durch jeweils ein weiteres Kabel in den Multiplexer eingebracht werden.

Diese aus der Praxis bekannte Anordnung weist den Nachteil auf, dass zahlreiche Kabel zum einen zwischen Schreib-/Leseeinheit und Multiplexer sowie zwischen den jeweiligen Multiplexern und den RFID-Antennen verlegt und sinnvoll im Regal verbaut werden müssen. Zudem müssen auch die Multiplexer abhängig von der Anzahl der Antennen im Regal verbaut und mit Spannung versorgt werden. Dies generiert höhere Materialkosten, einen größeren Planungs- und Umsetzungsaufwand, was wiederum unter anderem zu höheren Personalkosten führt.

In Anwendungen mit einer Vielzahl von Regalen, zum Beispiel Bibliotheken oder Archiven für Dokumente werden mehrere Regale zu einem RFID-Regalsystem verbunden. Hier wirken sich die beschriebenen Nachteile in noch größerem Umfang aus.

Aus dem Stand der Technik sind eine Reihe von Lösungen bekannt, die sich mit dem Thema intelligentes Regal, welches auch als "Smart Shelf" bezeichnet wird, befassen und eine Regalanordnung betreffen, die ausgehend von einer Schnittstelle zur Datenbank alle RFID-Erfassungspunkte verbindet.

Aus dem Stand der Technik (EP 1 785 913 A2) ist eine Regalanordnung bekannt, welche aus einem oder mehreren Regalböden, mindestens einem Multiplexer, einer RFID-Schreib-/Leseeinheit und mindestens einer RFID-Antenne besteht. In jedem Regalboden sind mehrere Antennenschleifen eingebaut. Die Antennenschleifen werden in einer Reihenschaltung zu einer Antenne zusammen verschaltet. Die Erfassungsbereiche der einzelnen Antennenschleifen bilden einen Gesamterfassungsbereich über den gesamten Regalboden. Somit ist für jeweils einen Regalboden genau eine Antenne notwendig. Die verschiedenen Regalböden werden über mindestens einen externen Multiplexer, der sich beispielsweise im Regalfuß befinden kann, zu einer Regalanordnung verbunden. Die Multiplexer werden über einen getrennten Controller gesteuert. Diese Lösung weist den Nachteil auf, dass durch die Baumstruktur der Kabel zwischen Multiplexer und Regalböden und dem externen Controller die Verkabelung der Regalanordnung sehr aufwendig ist. Auch ist technisch die Länge des Antennenleiters und somit die Größe beziehungsweise Ausführung des Regalbodens begrenzt. Ein Antennenleiter weist je laufenden Meter eine Induktivität auf.

Für eine runde Antenne gilt,

$$L = \mu_0 \cdot N^{1,9} \cdot r \cdot \ln\left(\frac{r}{r_0}\right)$$

$$\left[\frac{V \cdot s}{A} = H\right]$$

$L$ = Induktivität
$\mu_0$ = magnetische Feldkonstante
$N$ = Anzahl der Windungen
r = Radius
$r_0$ = Radius.

Ab einer Größe r = 0,5 m werden die notwendigen Kondensatoren für die Resonanzfrequenz so klein, dass man auf praktische Grenzen stößt, zum Beispiel hat eine kleine Platine für die Abgleichschaltung 10 bis 40 pF Eigenkapazität (picoFarad). Somit ist ein Einstellen der Antennen sehr schwer.

$$f_{res} = \frac{1}{2\pi\sqrt{L*C}}$$

$f_{res}$ = Resonanzfrequenz
$L$ = Induktivität
$C$ = Kapazität.

Überschreiten die Antennenleiter eine von der Frequenz abhängige Länge, ist ein Abgleich auf die Resonanzfrequenz nur noch schwer möglich. Weiterhin wird die Hochfrequenzenergie der Schreib-/Leseeinheit auf einen Bereich verteilt, womit die erzeugten Feldstärken geringer werden, was zur Folge hat, dass der Erfassungsbereich kleiner wird.

Weiterhin ist aus dem Stand der Technik (US 2006/0232382 A1) bekannt, eine Regalanordnung vorzusehen, welche aus einem intelligenten Datennetzwerk und Regalböden in verschiedenen Ebenen besteht. Dabei ist eine Kontrolleinheit des jeweils ersten Regalbodens einer Ebene mit dem Netzwerk über ein Kommunikationskabel verbunden. Der erste Regalboden in einer Ebene enthält die Kontrolleinheit, eine Schreib-/Leseeinheit, eine oder mehrere Antennen und (Um-)Schalter zum Aktivieren der Antennen. Die nachfolgenden Regalböden enthalten ebenfalls eine oder mehrere Antennen und wieder (Um-)Schalter zum Aktivieren der Antennen. Zwischen den Regalböden ist jeweils ein Verbindungskabel für die Hochfrequenzsignale und ein Verbindungskabel für die Steuersignale notwendig. Die Kontrolleinheiten beziehungsweise die gesamte Regalanordnung wird über die Datenverbindung zum Datennetzwerk gesteuert. Die zwingend notwendige Spannungsversorgung für die Regalböden muss über ein weiteres, drittes Kabel für jeden Regalboden erfolgen. Sämtliche Antennen in einem Regalboden sind gleichzeitig über das Hochfrequenzkabel verbunden. Über einen Decoder vor jeder Antenne werden die Antennen mit verschiedenen Signalen versorgt. Der Decoder hat drei Schaltzustände: Er kann genau das unmodulierte Hochfrequenzsignal, nur das Modulationssignal oder nur das Hochfrequenzsignal und das Modulationssignal an die Antenne weiterleiten. Diese Lösung weist den Nachteil auf, dass mehrere Decoder und Schreib-/Leseeinheiten sowie Verbindungs- und Steuerkabel in einem Regalboden verbaut werden müssen. Darüber hinaus sind gemäß diesem Stand der Technik zusätzlich passive Antennen vorgesehen, die eine bestimmte Phasenlage aufweisen. Durch diese zusätzlichen passiven Antennen ist ein mehrdimensionales Lesen möglich, so dass Transponder unabhängig von ihrer Ausrichtung erfassbar sind. Diese zum Stand der Technik gehörende Ausführung weist jedoch den Nachteil auf, dass eben diese passiven Antennen zusätzlich vorgesehen sind, was die Kosten insgesamt erhöht, aber auch die Ansteuerung und den Abgleich aller Antennen auf Resonanzfrequenz verkompliziert.

Aus dem Stand der Technik (DE 10 2004 050 089 A1) ist weiterhin eine Regalanordnung bekannt, bei der Antennen und Schreib-/Lesestationen in jedem Regalboden integriert sind. Die Verbindungsleitung für die Spannungsversorgung und Datenübertragung, die durch die einzelnen Regalböden erfasst werden, sind über ein System aus Kabeln und Schienen-/ Steckverbindungen mit der Zentraleinheit verbunden. Diese Lösung weist den Nachteil auf, dass jeweils eine Schreib-/ Lesestation pro Regalboden benötigt wird, um die Regale und das Regalsystem aufzubauen. Weiterhin benötigt jeder Regalboden eine Spannungsversorgungsleitung und Kommunikationsverbindung. Wegen der hohen Anzahl der Transponder am Regalboden und der verschiedenen Abstände der Transponder muss jede der verbauten Schreib-/Lesestationen entsprechend leistungsfähig sein.

Weiterhin ist aus dem Stand der Technik (US 2016/0034732 A1) bekannt, dass in jedem Regalboden eine Schreib-/Leseeinheit und mindestens eine Antenne durch eine einfache parallele Verbindung mit Spannung versorgt wird. Die Kommunikation mit der Zentraleinheit erfolgt über WLAN/Funkstandards. Der Nachteil dieser Lösung ist darin zu sehen, dass ein hoher Aufwand an integrierter Elektronik, bestehend aus Schreib-/Leseeinheit und WLAN-Sende-/ Empfangseinheit besteht, die in jedem Regalboden zu verbauen ist. Zudem fallen hohe Kosten an, die mit der Verwendung einer Schreib-/Leseeinheit verbunden sind. Wegen der hohen Anzahl der Transponder am Regalboden und der verschiedenen Abstände der Transponder muss jede der verbauten Schreib-/Lesestationen entsprechend leistungsfähig sein. Zusätzlich sind hier die Kosten für die WLAN-Sende-/Empfangseinheiten einzurechnen.

Zum Stand der Technik (US 2015/0 235 066 A1) gehört ein Warenmanagement-System mit einer UHF-Antenne, bei der die Anpassung der Antenne über das Layout, das heißt die Art der Verlegung der Antennenleitung erfolgt. Gemäß diesem Stand der Technik ist genau eine einzige Antenne vorgesehen, da ausschließlich eine Antennenleitung in dem WarenManagement-System angeordnet ist. Diese Ausführungsform weist den Nachteil auf, dass diese einzige Antenne nur gemeinsam für das gesamte System ansteuerbar ist, so dass nicht erkannt werden kann, wo sich ein Gegenstand befindet. Dieses zum Stand der Technik gehörende System weist den Nachteil auf, dass es kein magnetisches System ist. Darüber hinaus wird die gesamte Sendeleistung auf sämtliche Regalböden verteilt, wodurch geringere Feldstärken vorhanden sind. Entscheidender Nachteil ist jedoch, dass die Abstimmung über das komplette Regalsystem technisch sehr aufwendig ist.

Auch der zum Stand der Technik (US 2012/0 056 720 A1) gehörende RFID-Reader zum Identifizieren von Waren ist als UHF-Reader ausgebildet. Auch bei diesem zum Stand der Technik gehörenden System erfolgt die Anpassung der Antenne über das Antennenlayout, was aufwendig und damit nachteilig ist. Dieser Stand der Technik offenbart eine Vorrichtung in Form eines Netzsteckers mit eingebautem Reader und Antenne, was den Nachteil aufweist, dass bei einem Einsatz in einem Regal mit mehreren Regalböden für jeden Ablageboden ein Netzstecker notwendig ist.

Das der Erfindung zugrunde liegende technische Problem besteht darin, ein Regal oder einen Schrank mit wenigstens zwei Ablageböden anzugeben, mit der oder dem die aus dem Stand der Technik bekannten Nachteile vermieden werden.

Dieses technische Problem wird wie in den unabhängigen Ansprüchen definiert gelöst. Die abhängigen Ansprüche sind auf bevorzugte Ausführungsbeispiele gerichtet.

Unter einem Regal oder Schrank im Sinne der Erfindung wird ein offenes Regal oder ein geschlossener Schrank verstanden. Von der Erfindung sind auch Kühlschränke, Heizschränke, Regale oder Schränke zum Züchten von Pflanzen oder dergleichen eingeschlossen.

Das erfindungsgemäße Regal oder der erfindungsgemäße Schrank betrifft das Gebiet passiver RFID-Transponder in der Anwendung in einem Regal oder einem Schrank, welches/welcher sich durch einen kompakten und einfachen Aufbau auszeichnet. Durch die einfache modulare Struktur, die kompakte Bauweise, die Verbindung mit nur einem Kabel pro Einheit und die sequenzielle Verkabelung entsteht eine Lösung mit geringem Herstellungs-, Wartungs- und Montageaufwand. Gemäß der Erfindung ist vorgesehen, dass das Verbindungskabel genau eine Signalleitung aufweist. Die wenigstens eine Signalleitung weist den Vorteil auf, dass der Verkabelungsaufwand sehr gering ist.

Gemäß der Erfindung ist auch vorgesehen, dass genau eine Schreib-/Leseeinheit in dem Regal oder dem Schrank vorgesehen ist. Es ist nur eine einzige Schreib-/ Leseeinheit vorhanden. Hierdurch wird das erfindungsgemäße Regal oder der erfindungsgemäße Schrank kostengünstig. Es können weitere elektrische oder elektronische Komponenten vorgesehen sein.

Gemäß einer vorteilhaften Ausführungsform der Erfindung ist vorgesehen, dass in jedem Ablageboden wenigstens zwei Antennen angeordnet sind, die einzeln adressierbar sind. Dadurch ist gewährleistet, dass mit dem erfindungsgemäßen Regal oder dem Schrank erkannt werden kann, auf welchem Ablageboden sich ein Transponder befindet. Durch den Einsatz von wenigstens zwei Antennen in einem Ablageboden weist das erfindungsgemäße Regal oder der Schrank zum einen den Vorteil auf, dass die Position des Transponders auf dem Ablageboden auf den Erfassungsbereich einer der wenigstens zwei Antennen genau bestimmt werden kann. Zum anderen kann die Position des Transponders mit dem erfindungsgemäßen Regal oder dem Schrank bestimmt werden, und zwar je nach Ausführung zwei Ausrichtungen oder unabhängig von der Ausrichtung des Transponders auf dem Ablageboden. Zum Beispiel kann ein Buch mit einem in dem Buch angeordneten Transponder in dem Regal liegen oder stehen und es wird trotzdem erkannt, in welchem Ablageboden sich das Buch befindet.

Darüber hinaus weist das erfindungsgemäße Regal oder der Schrank den Vorteil auf, dass die komplette Kommunikation und die Spannungsversorgung über die genau eine Signalleitung in dem Verbindungskabel stattfindet.

Gemäß einer vorteilhaften Ausführungsform der Erfindung ist vorgesehen, dass das Verbindungskabel für die Spannungsversorgung und für die Übertragung der Hochfrequenzsignale und für die Übertragung der Steuersignale für die eine oder mehrere Funktionseinheiten ausgebildet ist. Wie schon ausgeführt, verringert sich hierdurch der Verkabelungsaufwand in dem erfindungsgemäßen Regal oder dem Schrank erheblich.

Vorteilhaft ist vorgesehen, dass die Verbindung der genau einen Schreib-/Leseeinheit und sämtlicher RFID-Antennen des Regales oder des Schrankes mit dem genau einen Verbindungskabel als sequenzielle Verbindung ausgebildet ist. Bei diesem Aufbau ist als Verbindung zwischen der Schreib-/Leseeinheit und sämtlichen RFID-Antennen jeweils nur das eine Verbindungskabel vorgesehen, über das die Spannungsversorgung und gleichzeitig die Kommunikation durchgeführt wird.

Eine weitere vorteilhafte Ausführungsform der Erfindung sieht vor, dass jeder Ablageboden jeweils genau einen Eingang und einen Ausgang zum Anschließen des Verbindungskabels aufweist. Da eine sequenzielle Verbindung zwischen der Schreib-/Leseeinheit und sämtlichen Antennen vorgesehen ist, benötigt jeder Ablageboden genau einen Eingang und einen Ausgang zum Anschließen des Verbindungskabels. Der Eingang und der Ausgang können als Buchse ausgebildet sein zum Einstecken oder Anschrauben des Verbindungskabels. Das Verbindungskabel kann auch mit dem Eingang oder Ausgang verlötet sein. Es können auch andere Befestigungsmöglichkeiten vorgesehen sein.

Gemäß einer bevorzugten Ausführungsform der Erfindung ist vorgesehen, dass die von der Schreib-/Leseeinheit gesendeten Signale aus einem Hochfrequenzträgersignal und/oder Kommunikationsprotokollen und/oder Steuerungsprotokollen und/oder Informationen für verschiedene Funktionseinheiten gebildet sind.

Bei den gesendeten Signalen handelt es sich vorteilhaft um Signale mit derselben Modulation, welche auch zur Kommunikation mit Transpondern verwendet werden können. Die Transponder sind zum Beispiel in oder an Waren angeordnet. Diese Waren können vorteilhaft in dem erfindungsgemäßen Regal oder dem Schrank angeordnet werden.

Diese Ausführungsform weist den Vorteil auf, dass bei einem aus der Schreib-/Leseeinheit und mindestens einem Ablageboden bestehendem Regal oder Schrank alle Signale (Hochfrequenzträgersignal und/oder die Kommunikationsprotokolle zu den Transpondern und/oder die Steuerungsprotokolle und/oder Steuerungsinformationen für die verschiedenen Funktionseinheiten und/oder die DC-Spannungsversorgung) von der Schreib-/Leseeinheit zum ersten Ablageboden und vom ersten Ablageboden zu den folgenden Ablageböden jeweils über genau ein gemeinsames Kabel übertragen werden. Dabei weist jeder Ablageboden genau einen Eingang und einen Ausgang auf. Dieser Ausgang des ersten Ablagebodens wird vorteilhaft direkt mit dem Eingang des nächsten Ablagebodens verbunden.

Gemäß einer besonders bevorzugten Ausführungsform der Erfindung ist die Verbindung der einen Schreib-/Leseeinheit und sämtlicher RFID-Antennen des Regales oder des Schrankes mit dem genau einen Verbindungskabel als sequenzielle Verbindung ausgebildet.

Diese sequenzielle Struktur ist vorteilhaft modular erweiterbar und ausschließlich durch die Dämpfung der verschiedenen Signale in Umfang und damit Erweiterungsfähigkeit begrenzt. Jeder Ablageboden weist vorteilhaft mindestens eine, besonders vorteilhaft jedoch mehrere Antennen auf und beinhaltet eine Funktionseinheit sowie die Antennenleiter mindestens einer oder mehrerer Antennen.

Eine Schreib-/Leseeinheit steuert das gesamte Regal oder den gesamten Schrank. Vorteilhaft ist die Schreib-/ Leseeinheit als intelligente Schreib-/Leseeinheit ausgebildet.

Gemäß einer vorteilhaften Ausführungsform der Erfindung ist vorgesehen, dass der Ausgang eines Ablagebodens unmittelbar mit dem Eingang eines nächsten Ablagebodens verbunden ist.

Hierdurch wird der Verkabelungsaufwand des erfindungsgemäßen Regales oder des Schrankes deutlich reduziert.

Gemäß einer weiteren vorteilhaften Ausführungsform der Erfindung ist vorgesehen, dass eine Funktionseinheit aus einer Steuereinheit (CPU), aus einem Steuerempfänger und einem Steuersender, einem Netzteil für die verschiedenen Funktionsblöcke, einer Antennenabgleichschaltung für die Antennen, einem Antennenschalter zum Öffnen eines Antennenkreises, einem Hochfrequenzschalter für Hochfrequenz und Modulationssignale, einem Wechselschalter und einem Tiefpassfilter gebildet ist. Diese Funktionseinheit ist vorteilhaft kompakt aufgebaut.

Eine weitere vorteilhafte Ausführungsform der Erfindung sieht vor, dass die Funktionseinheit aus genau einer Leiterplatte gebildet ist. Hierdurch wird der kompakte Aufbau der Funktionseinheit erreicht.

Gemäß einer weiteren vorteilhaften Ausführungsform der Erfindung ist vorgesehen, dass wenigstens ein Wechselschalter vorgesehen ist, wenn ein Ablageboden wenigstens zwei Antennen aufweist.

Über den Wechselschalter werden die verschiedenen Antennen in einem Ablageboden gesteuert. Diese Steuerung weist den Vorteil auf, dass die Antennen einzeln angesteuert werden können und hierdurch die Transponder separat erfasst werden können. Die Position des Transponders kann hierdurch auf dem Ablageboden genauer bestimmt werden, nämlich im Erfassungsbereich der einzelnen Antennen.

Eine weitere vorteilhafte Ausführungsform der Erfindung sieht vor, dass jede Antenne einen Antennenschalter aufweist, um einen Antennenleiter der Antenne bei Nichtbenutzung der Antenne zu unterbrechen.

Die Antennenschalter sämtlicher nicht aktiver Antennen sind offen, so dass diese Antennen keinen Transponder erfassen. Hierdurch ist gewährleistet, dass ein Transponder, der im Erfassungsbereich einer Antenne, die aktiv ist, erfasst wird, genau dieser Antenne zugeordnet werden kann. Hierüber ist eine Lokalisierung des Transponders möglich. Fehlerfassungen durch benachbarte Antennen werden hierdurch vermieden. Darüber hinaus wird in die Antennen mit offenen Antennenschaltern keine Energie gekoppelt. Das heißt, es wird keine Verstimmung der Resonanzfrequenz der aktiven Antennen bewirkt. Wenn eine Kopplung vorhanden wäre, würde ein Teil der Energie in eine der nicht mit der Schreib-/Leseeinheit verbundenen Antennen gekoppelt werden. Somit ginge ein Teil der Energie für die aktive Antenne verloren und es können über die nicht verbundene Antenne Transponder in nicht korrekter Weise erfasst werden.

Gemäß einer bevorzugten Ausführungsform der Erfindung ist vorgesehen, dass von mehreren benachbarten Antennen genau ein Antennenschalter geschlossen ist. Hierdurch werden Fehlerfassungen vermieden, das heißt, es wird hierdurch vermieden, dass zwei benachbarte Antennen das Signal eines Transponders erfassen und der Transponder damit nicht eindeutig einer Antenne zugeordnet werden kann.

Gemäß der Erfindung ist vorgesehen, dass das Verbindungskabel als Koaxialkabel ausgebildet ist. Das Verbindungskabel weist eine einadrige Signalleitung auf und einen Schirm als Ground.

Die erfindungsgemäße Regal- oder Schrankanordnung mit wenigstens zwei Regalen oder mit wenigstens zwei Schränken zeichnet sich dadurch aus, dass die Regale oder Schränke wenigstens zwei Ablageböden aufweisen, wobei jeweils wenigstens eine RFID-Antenne bestehend aus einem Antennenleiter und einer Antennenabgleichschaltung in jedem Ablageboden angeordnet ist, wobei das Regal oder der Schrank eine Schreib-/Leseeinheit aufweist, bei dem für eine Verbindung der Schreib-/Leseeinheit mit der wenigstens einen RFID-Antenne ein Verbindungskabel vorgesehen ist und bei dem genau eine Schreib-/Leseeinheit vorgesehen ist, dass die genau eine Schreib-/Leseeinheit sämtliche Antennen in sämtlichen Ablageböden des Regales oder des Schrankes steuernd ausgebildet ist, dass jeder Ablageboden jeweils lediglich einen Eingang und einen Ausgang aufweist und dass zwischen der Schreib-/Leseeinheit und einem ersten Ablageboden und/oder zwischen jeweils zwei Ablageböden genau ein Verbindungskabel vorgesehen ist, über das sämtliche Signale übertragbar sind und eine Spannungsversorgung erfolgt.

Sämtliche Ablageböden des erfindungsgemäßen Regales oder Schrankes liegen gleichzeitig an der Spannungsversorgung an. Die Versorgungsspannung wird vorteilhaft in das Verbindungskabel hinter dem Hochfrequenzausgang der Schreib-/Lesestation eingespeist. Dabei genügen zwischen den Ablageböden auch kurze Kabel, da der Abstand zwischen den Ablageböden relativ gering ist. Die Ausgangsbuchse des letzten Ablagebodens ist vorteilhaft entweder offen oder mit einem Abschlusswiderstand abgeschlossen. Vorteilhaft sind die Antennenschalter sämtlicher nichtaktiver Antennen offen.

Nach dem Einschalten, das heißt im Grundzustand, sind sämtliche Ablageböden eines Regales oder Schrankes mit der Schreib-/Leseeinheit verbunden, die Antennen sind nicht mit der Schreib-/Leseeinheit verbunden und sämtliche Antennenschalter im Antennenkreis sind offen. Durch den Hochfrequenzfilter, beispielsweise ein Tiefpassfilter, ist gewährleistet, dass sämtliche Funktionseinheiten gleichzeitig ausschließlich mit einer Gleichspannung (DC) versorgt werden. Alle Steuerungseinheiten laufen gleichzeitig und die Hochfrequenz wird von der Leseeinheit eingeschaltet.

Vorteilhaft steuert die Schreib-/Leseeinheit die Funktionseinheit im ersten Ablageboden an und schaltet sich zunächst auf die erste Antenne ein, womit auch der Antennenschalter in der ersten Antenne geschlossen wird. Somit ist diese Antenne aktiviert.

Zuerst sucht die Schreib-/Leseeinheit nach Transpondern im Erfassungsbereich der ersten Antenne. Die Daten der erkannten Transponder werden mit der Antennen- und/oder Ablagebodennummer in der Schreib-/Leseeinheit gespeichert und können von einem übergeordneten Datennetzwerk abgerufen werden.

Anschließend schaltet die Schreib-/Leseeinheit auf die nachfolgende Antenne. Befindet sich nur eine Antenne in ein und demselben Ablageboden, wird auf den nächsten Ablageboden umgeschaltet. Dieser Vorgang wird bis zur letzten Antenne im letzten Ablageboden wiederholt. Danach fängt die Lesesequenz vorteilhaft von vorne an.

Vorteilhaft besteht die Funktionseinheit der Erfindung aus folgenden Komponenten:

- eine Steuereinheit (CPU),
- einem Steuerempfänger und Steuersender,
- einem Netzteil für die verschiedenen Funktionsblöcke,
- einem Hochfrequenzschalter für hochfrequente Modulationssignale, wobei der Hochfrequenzschalter die Eingangs- und Ausgangsbuchse überbrückt oder auf die wenigstens eine Antenne im Ablageboden umschaltet,
- die Antennenabgleichschaltung für die Antennen,
- Antennenschalter (Antennenkreisöffner),
- einen Tiefpassfilter zwischen Ein- und Ausgangsbuchse zum Durchleiten der DC-Spannungsversorgung für die nachfolgenden Ablageböden.

Diese Module der Funktionseinheit befinden sich vorteilhaft auf genau einer Platine, wodurch eine kleine und kompakte Bauweise und eine kostengünstige Umsetzung, beispielsweise durch eine einfache Montage gewährleistet wird.

Ein weiterer wesentlicher Vorteil der Erfindung ist darin zu sehen, dass keine Verbindungskabel zwischen den einzelnen Antennen in einem Ablageboden erforderlich sind.

Eine mögliche Ausbildung der Regal- oder Schrankanordnung sieht vor, dass ein Regal oder Schrank aus beispielsweise vier Ablageböden besteht. In einer vorteilhaften Ausführungsform werden die Schreib-/Leseeinheit, das Netzteil und der Hochfrequenzausgang der Schreib-/Leseeinheit im Fuß des Regales oder des Schrankes verbaut.

Von der Schreib-/Leseeinheit führt genau ein Kabel zum ersten Ablageboden. Der Ausgang des Ablagebodens wird mit dem nächsten Ablageboden ebenfalls nur mit einem kurzen Kabel mit dem Eingang des nachfolgenden Ablagebodens verbunden.

Der Ausgang des letzten Ablagebodens wird vorteilhaft mit einem Abschlusswiderstand von beispielsweise 50 Ohm verbunden. Die Erfindung umfasst vorteilhaft eine kompakte Funktionseinheit pro Ablageboden, die auf einer Platinenlösung gemäß einer vorteilhaften Ausführungsform der Erfindung realisiert wird. Diese Funktionseinheit beinhaltet sämtliche notwendigen Antennenabgleichschaltungen, Antennenschalter zum Öffnen des Antennenleiters, die intelligenten Wechselschalter, eine CPU, einen Sender und einen Empfänger, ein Netzteil und den Hochfrequenzfilter.

Ein besonderer Vorteil der Erfindung gegenüber dem Stand der Technik besteht darin, dass bei der gezeigten Ausführungsform genau eine Schreib-/Leseeinheit pro Regal oder Schrank erforderlich ist und dass genau ein gemeinsames Kabel für das Hochfrequenzsendesignal, die Modulationssignale der Transponder sowie die Steuerungssignale der Funktionseinheiten und die Spannungsversorgung erforderlich ist. Dies hat besondere Vorteile in Hinsicht auf Wartung, Montage und Materialkosten.

Das erfindungsgemäße RFID-System arbeitet vorteilhaft in einem Bereich von 100 kHz bis 30 MHz. Besonders bevorzugt arbeitet das erfindungsgemäße RFID-System in einem Frequenzbereich von 13,56 MHz. Das System beruht auf dem Prinzip der magnetischen Kopplung zwischen der Readerantenne und dem Transponder. Andere RFID-Systeme im Bereich größer 100 MHz (UHF-Systeme), welche auf dem Prinzip der Ausbreitung des elektrischen Feldes beruhen, werden von der Erfindung nicht umfasst. Transponder bestehen vorteilhaft aus einem integrierten Mikroelektronikbauelement (IC) und einem Resonanzkondensator und einer Antennenspule, wobei der Resonanzkondensator häufig bereits in das Mikroelektronikbauelement integriert ist. Die Antennenspule und der Resonanzkondensator bilden einen elektrischen Schwingkreis und werden auf ihre Betriebsfrequenz von zum Beispiel 13,56 Megahertz (MHz) abgestimmt.

Weitere Merkmale und Vorteile der Erfindung ergeben sich anhand der zugehörigen Zeichnungen, in der mehrere Ausführungsbeispiele eines Regales und einer Regalanordnung nur beispielhaft dargestellt sind. In der Zeichnung zeigen:

Fig. 1    eine Schreib-/Leseeinheit mit Multiplexer und drei Antennen gemäß dem Stand der Technik;

Fig. 2    einen Lesebereich einer Antenne mit Parallelausrichtung Antenne/Transponder in Seitenansicht;

Fig. 3    eine Baumstruktur gemäß dem Stand der Technik;

Fig. 4    eine Darstellung eines Readers mit Multiplexerkaskade gemäß dem Stand der Technik;

Fig. 5    ein erfindungsgemäßes Regal in perspektivischer Ansicht mit einer Antenne pro Ablageboden;

Fig. 6    eine Darstellung einer sequenziellen Struktur verschiedener Regalböden gemäß einer Anordnung gemäß der Erfindung;

Fig. 7    eine Darstellung eines Schaltbildes einer erfindungsgemäßen Funktionseinheit;

Fig. 8    eine Regalanordnung mit vier einzelnen Regalen in Draufsicht;

Fig. 9    eine Regalanordnung mit vier einzelnen Regalen in Seitenansicht.

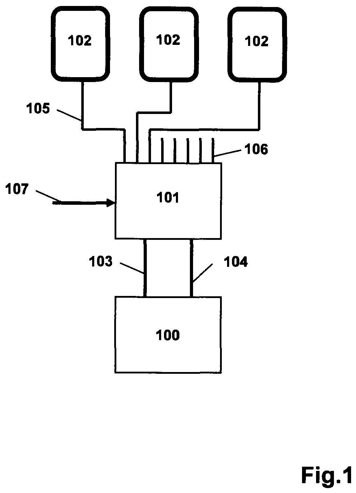

Fig. 1 zeigt eine Schreib-/Leseeinheit 100 mit einem nachgeschalteten Multiplexer 101 gemäß dem Stand der Technik. Antennen 102 werden von der Schreib-/Leseeinheit 100 über den Multiplexer 102 angesteuert. Zwischen der Schreib-/Leseeinheit 100 und dem Multiplexer 101 ist ein Hochfrequenz (HF)-Verbindungskabel 103 sowie ein digitales Steuerkabel 104 vorgesehen.

Der Multiplexer 101 weist Hochfrequenzausgänge auf. Der Multiplexer wird über eine DC Spannungsversorgung 107 mit Spannung versorgt. Die Antennen 102 werden jeweils über ein Hochfrequenzantennenkabel 105 angesteuert.

Diese aus dem Stand der Technik bekannte Lösung weist den Nachteil auf, dass ein sehr hoher Verkabelungsaufwand erforderlich ist. Die Antennen 102 sind beispielsweise in einem Ablageboden eines Regales angeordnet. Zu jeder Antenne führt wenigstens ein Hochfrequenzantennenkabel 105 und zu dem Multiplexer 101 führt das Hochfrequenzverbindungskabel 103 sowie das digitale Steuerkabel.

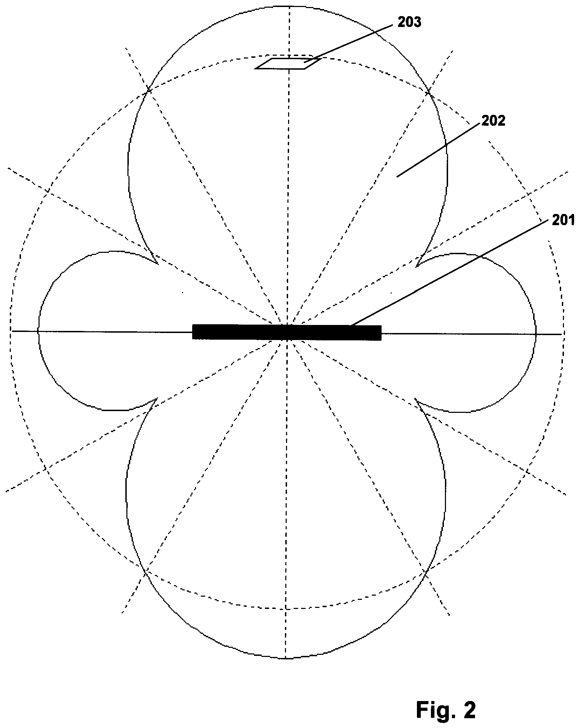

Fig. 2 zeigt eine RFID-Antenne 201 sowie einen Erfassungsbereich 202 der Antenne 201. Befindet sich ein RFID-Transponder 203 in dem Erfassungsbereich 202 der RFID-Antenne 201, so wird dieser Transponder von dem Feld der Antenne 201 aktiviert und die zugehörigen Transponderdaten können ausgelesen werden.

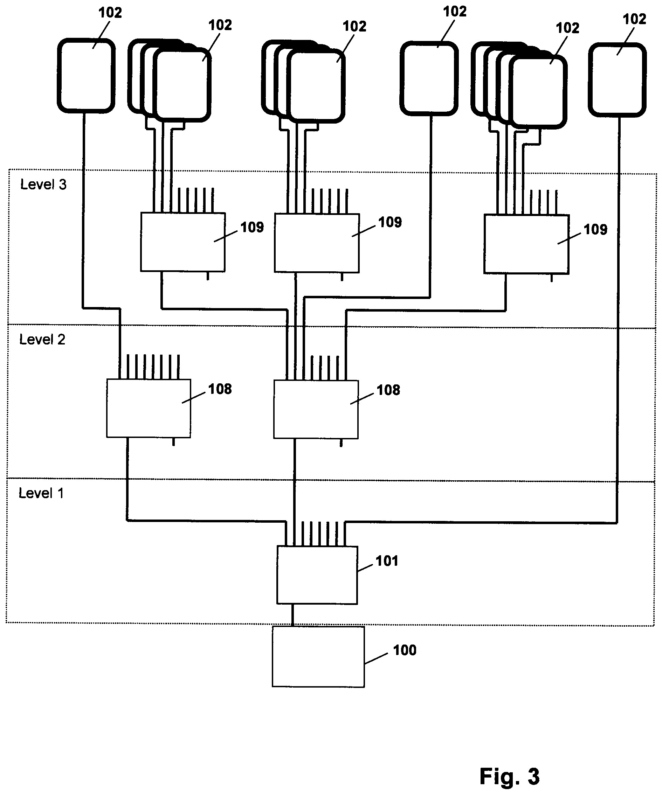

Fig. 3 zeigt eine Anordnung gemäß dem Stand der Technik mit einer Vielzahl von Antennen 102.

Über eine Schreib-/Leseeinheit 100 und einen ersten Multiplexer 101 werden zwei weitere Multiplexer 108 und eine erste Antenne 102 angesteuert.

Über den einen Multiplexer 108 werden weitere Multiplexer 109 angesteuert. Mit den Multiplexern 101, 108 und 109 werden die verschiedenen Antennen 102 angesteuert. Diese Ausführungsform bedeutet einen sehr hohen Verkabelungsaufwand, da zu jeder Antenne 102 wenigstens ein Kabel für die Datenübertragung geführt wird. Ein weiteres Kabel ist jeweils erforderlich für eine DC-Spannungsversorgung.

Gemäß Fig. 3 ist eine Baumstruktur gemäß dem Stand der Technik bezüglich der Verkabelung dargestellt. Wie schon ausgeführt, fehlt in der Darstellung das zusätzliche Kabel für die Spannungsversorgung.

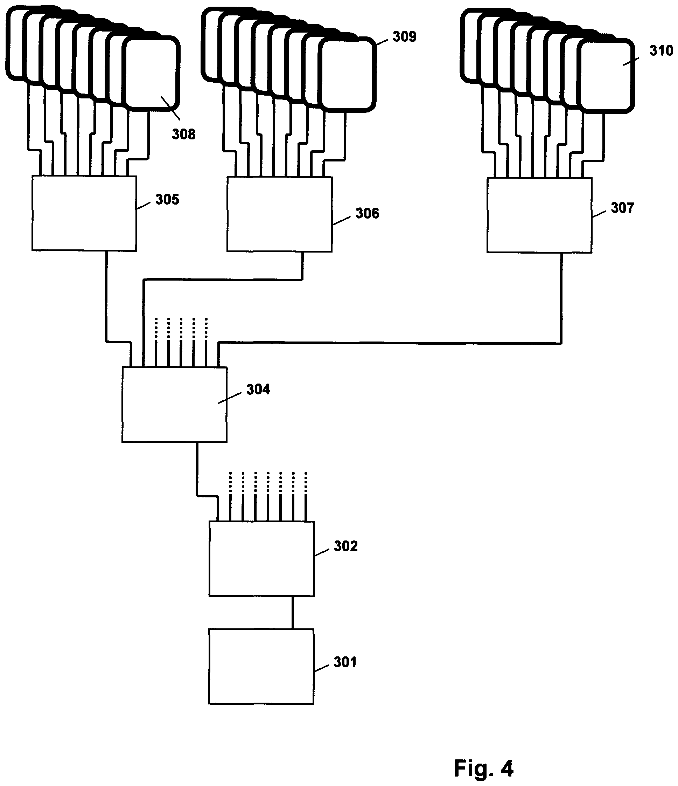

Gemäß Fig. 4 ist eine Multiplexerkaskade gemäß dem Stand der Technik dargestellt. Von einer Schreib-/Leseeinheit 301 wird ein Multiplexer 302 angesteuert, von dem wiederum ein weiterer Multiplexer 304 angesteuert wird. Über den Multiplexer 304 werden weitere Multiplexer 305, 306, 307 angesteuert. Von den Multiplexern 305, 306, 307 werden Antennen 308, 309, 310 angesteuert. Auch diese Ausführungsform erfordert einen sehr hohen Verkabelungsaufwand. Dargestellt sind die Kabel, über die die Steuersignale übertragen werden. Hinzu kommen noch die Kabel für eine Spannungsversorgung, das heißt, für jedes in Fig. 4 dargestellte Kabel ist ein zweites Kabel bezüglich der Spannungsversorgung vorgesehen.

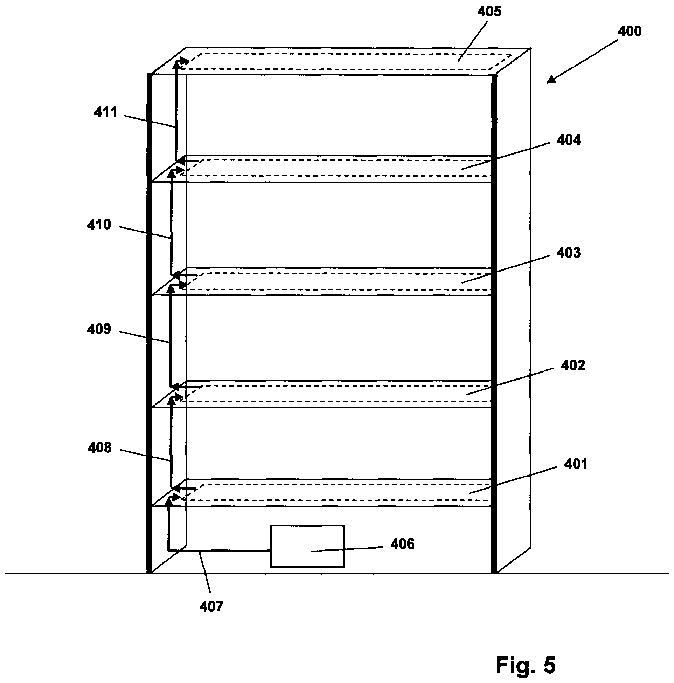

Fig. 5 zeigt ein Regal 400 gemäß der Erfindung. Das Regal 400 weist Ablageböden 401, 402, 403, 404, 405 auf. Eine Schreib-/Leseeinheit 406 ist über eine einzige Leitung 407, über die gleichzeitig die Daten und Hochfrequenzsignale übertragen werden und die Spannungsversorgung erfolgt, mit dem ersten Ablageboden 401 verbunden. Der Ablageboden 401 ist über eine weitere Leitung 408, über die ebenfalls gleichzeitig die Daten und Hochfrequenzsignale übertragen werden und die Spannungsversorgung erfolgt, mit dem Ablageboden 402 verbunden. Zwischen den Ablageböden 402 und 403 ist eine Leitung 409 vorgesehen, zwischen den Ablageböden 403, 404 ist eine Leitung 410 vorgesehen. Zwischen den Ablageböden 404 und 405 ist eine Leitung 411 vorgesehen.

Über die Leitungen 407, 408, 409, 410, 411 werden zum einen sämtliche Signale wie Hochfrequenzträgersignale, Kommunikationsprotokolle zu den Transpondern, Steuerungsprotokolle und/oder Steuerinformationen für die verschiedenen Funktionseinheiten übertragen und es erfolgt darüber hinaus die DC-Spannungsversorgung. Hierzu ist zwischen der Schreib-/Leseeinheit 406 und dem ersten Ablageboden sowie zwischen den folgenden weiteren Ablageböden jeweils genau ein gemeinsames Kabel erforderlich.

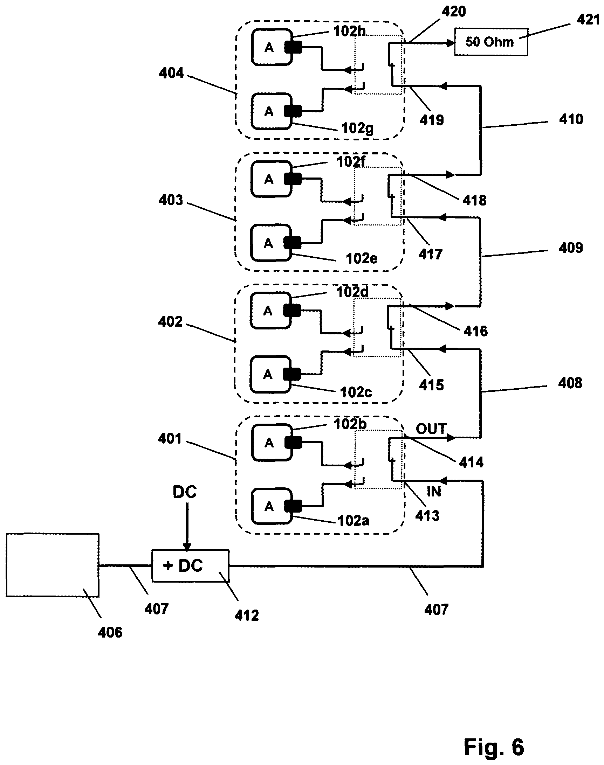

Gemäß Fig. 6 sind die Antennen 102a, 102b, 102c, 102d, 102e, 102f, 102g, 102h, die in den einzelnen Ablageböden angeordnet sind, dargestellt. Die Schreib-/Leseeinheit 406 übermittelt über die Leitung 407 ein Hochfrequenzsignal an den ersten Ablageboden 401. Eine Spannungsversorgungseinheit 412 zur Einkopplung der DC-Spannungsversorgung ist der Schreib-/Leseeinheit 406 nachgeordnet. Über die Leitung 407, die zu dem ersten Ablageboden 401 führt, wird die Spannungsversorgung und das Hochfrequenzträgersignal einer Eingangsbuchse 413 des ersten Ablagebodens zugeführt.

Eine Ausgangsbuchse 414 des ersten Ablagebodens 401 ist über das Kabel 408 mit einer Eingangsbuchse 415 des zweiten Ablagebodens 402 verbunden.

Eine Ausgangsbuchse 416 des zweiten Ablagebodens 402 ist mit einer Eingangsbuchse 417 des dritten Ablagebodens 404 verbunden über das Kabel 409. Eine Ausgangsbuchse 418 des dritten Ablagebodens 403 ist mit einer Eingangsbuchse 419 über das Kabel 410 verbunden. An eine Ausgangsbuchse 420 des vierten Ablagebodens 404 ist ein Abschlusswiderstand von beispielsweise 50 Ohm angeschlossen.

In den Ablageböden 401, 402, 403, 404 sind jeweils zwei Antennen 102a, 102b; 102c, 102d; 102e, 102f; 102g, 102h angeordnet, um Transponder, die sich im Erfassungsbereich des jeweiligen Ablagebodens 401, 402, 403, 404 befinden, zu erfassen. Über den Schalter 413 können die Antennen 102a, 102b, 102c, 102d, 102e, 102f, 102g, 102h einzeln aktiviert werden. Hierdurch kann erfasst werden, ob sich ein Transponder im Bereich der Antenne 102a oder einer anderen Antenne 102b, 102c, 102d, 102e, 102f, 102g, 102h befindet.

Auch ergibt sich in einem Aufbau von mehreren Antennen in einem Ablageboden die Möglichkeit Transponder in verschiedenen Orientierungen/Ausrichtungen zu lesen

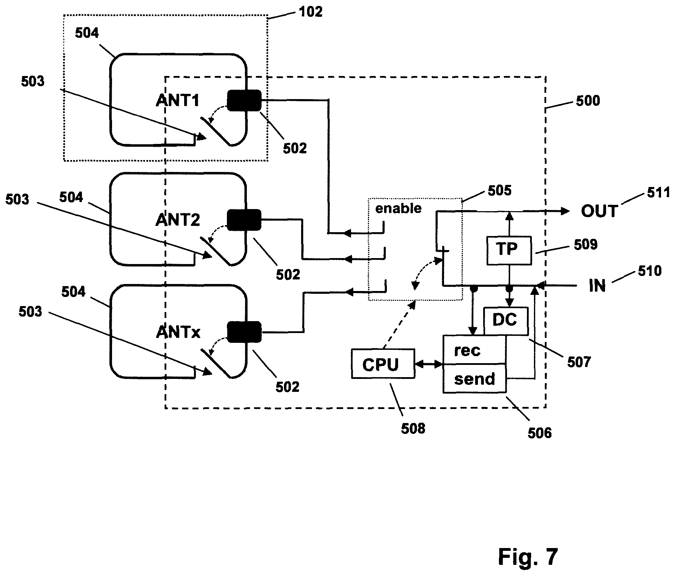

In Fig. 7 sind nochmals Antennen 102 eines beliebigen Ablagebodens dargestellt. Mit 500 ist eine Funktionseinheit bezeichnet. Jede Antenne 102 weist wenigstens einen Antennenleiter 504 auf und eine Antennenabgleichschaltung 502. Jedem Antennenleiter 504 ist ein Antennenschalter 503 zugeordnet, um die Antennenleiter 504 zu aktivieren oder deaktivieren.

Die Funktionseinheit 500 weist einen Wechselschalter 505, einen Empfänger/Sender 506 sowie ein DC-Netzteil 507 zur Spannungsversorgung auf. Darüber hinaus ist eine Steuereinheit 508 mit einer CPU, ein Tiefpassfilter 509 sowie ein Eingang 510 und ein Ausgang 511 vorgesehen.

Bei der Erfassung von Transpondern in dem erfindungsgemäßen Regal wird beispielsweise die in Fig. 7 dargestellte Antenne ANT1 aktiviert, das heißt, der Wechselschalter 505 schaltet auf Antenne ANT1 und der Antennenschalter 503 dieses Antennenleiters wird geschlossen. Die Antennen ANT2 und ANTx bleiben offen, das heißt, die Antennenschalter 503 dieser Antennen bleiben offen. Wird ein Transponder im Bereich der Antenne ANT1 erfasst, ist die Position eindeutig, nämlich im Bereich dieser Antenne. Eine Fehlerfassung von RFID-Transpondern kann hierüber vermieden werden.

Es können mehr als die drei dargestellten Antennen ANT1, ANT2, ANTx vorgesehen sein. Das "x" steht für eine Vielzahl weiterer Antennen.

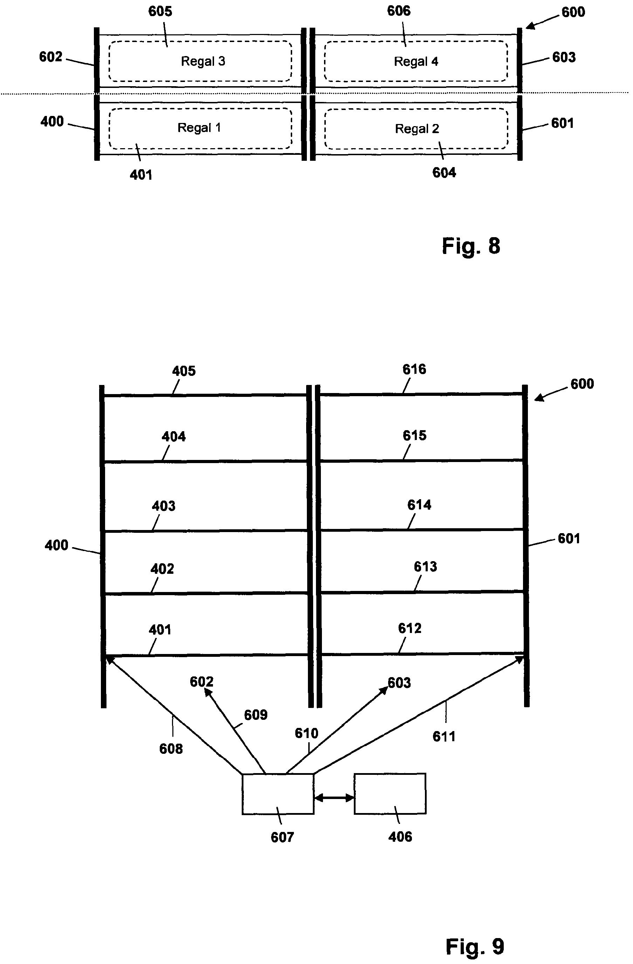

Fig. 8 zeigt eine Regalanordnung 600, die aus vier Regalen 400, 601, 602, 603 besteht. Das Regal 400 ist schon in den Fig. 5, 6, 7 beschrieben worden. In Fig. 8 ist im Regal 400 der Ablageboden 401 angeordnet. In dem Regal 601 ist ein Ablageboden 604, im Regal 602 ein Ablageboden 605 und im Regal 603 ein Ablageboden 606 angeordnet.

Wie in Fig. 9 dargestellt, weist die Regalanordnung 600 eine Schreib-/Leseeinheit 406 auf. Die vier Regale 400, 601, 602, 603 werden über einen zwischen den Regalen 400, 601, 602, 603 angeordneten Multiplexer 607 gesteuert und mit Gleichspannung versorgt. Zu jedem Regal 400, 601, 602, 603 führt jeweils genau ein Verbindungskabel 608, 609, 610, 611. Über diese Leitung erfolgt - wie schon ausgeführt - die Spannungsversorgung und es werden sämtliche Signale wie Hochfrequenzträgersignal und/oder die Kommunikationsprotokolle zu den Transpondern und/oder die Steuerungsprotokolle und/oder die Steuerinformationen für die verschiedenen Funktionseinheiten übertragen.

Das Regal 400 weist die Ablageböden 401, 402, 403, 404, 405 auf, in denen, wie in der Fig. 6 dargestellt ist, jeweils eine Antenne (in Fig. 9 nicht dargestellt) angeordnet ist. Analog weisen die Regale 601, 602, 603 entsprechende Ablageböden auf. So weist das Regal 601 die Ablageböden 612, 613, 614, 615, 616 auf. In den Ablageböden 401, 402, 403, 404, 405, 612, 613, 614, 615, 616 sind Antennen, wie in Fig. 7 dargestellt, angeordnet. Die Antennen 504 weisen Antennenschalter 503 auf, die geöffnet oder geschlossen werden können. Antennen, die nicht benutzt werden, weisen einen geöffneten Antennenschalter auf. Ist beispielsweise der Antennenschalter der Antenne 402 geschlossen, das heißt, diese Antenne ist aktiv, sind auf jeden Fall die Antennenschalter der Antennen 401, 403, 612, 613, 614 geöffnet, um einen Transponder, der sich im Bereich des Ablagebodens 402 befindet, nicht von den Antennen der Ablageböden 401, 403, 412, 413, 416 zu erfassen.

Die Fig. 5 bis 9 zeigen Regale. Die Erfindung ist jedoch gleichermaßen auf Schränke anwendbar.

Bezugszahlen

| | |
|---|---|
| 100 | Schreib-/Leseeinheit |
| 101 | Multiplexer |
| 102 | Antenne |
| 102a | Antenne |
| 102b | Antenne |
| 102c | Antenne |
| 102d | Antenne |
| 102e | Antenne |
| 102f | Antenne |
| 102g | Antenne |
| 102h | Antenne |
| 103 | Hochfrequenzverbindungskabel |
| 104 | digitales Steuerkabel |
| 105 | Hochfrequenzantennenkabel |
| 106 | Hochfrequenzausgang Multiplexer |
| 107 | DC-Spannungsversorgung |
| 108 | Multiplexer |
| 109 | Multiplexer |
| 201 | RFID-Antenne |
| 202 | Erfassungsbereich der Antenne |
| 203 | RFID-Transponder |
| 301 | RFID-Schreib-/Leseeinheit |
| 302 | Multiplexer |
| 304 | Multiplexer |
| 305 | Multiplexer |
| 306 | Multiplexer |
| 307 | Multiplexer |

| | |
|---|---|
| 308 | Antenne |
| 309 | Antenne |
| 310 | Antenne |
| 400 | Regal |
| 401 | Ablageboden |
| 402 | Ablageboden |
| 403 | Ablageboden |
| 404 | Ablageboden |
| 405 | Ablageboden |
| 406 | Schreib-/Leseeinheit |
| 407 | Verbindungskabel |
| 408 | Verbindungskabel |
| 409 | Verbindungskabel |
| 410 | Verbindungskabel |
| 411 | Verbindungskabel |
| 412 | DC-Netzteil zur Spannungsversorgung |
| 413 | Eingangsbuchse |
| 414 | Ausgangsbuchse |
| 415 | Eingangsbuchse |
| 416 | Ausgangsbuchse |
| 417 | Eingangsbuchse |
| 418 | Ausgangsbuchse |
| 419 | Eingangsbuchse |
| 420 | Ausgangsbuchse |
| 421 | Abschlusswiderstand |
| 500 | Funktionseinheit |
| 502 | Antennenabgleichschaltung |
| 503 | Antennenschalter |
| 504 | Antennenleiter |
| 505 | Wechselschalter |
| 506 | Empfänger/Sender |
| 507 | DC-Netzteil |
| 508 | Steuereinheit |
| 509 | Tiefpassfilter |
| 510 | Eingang |
| 511 | Ausgang |
| 600 | Regalanordnung |
| 601 | Regale |
| 602 | Regale |
| 603 | Regale |
| 604 | Ablageboden |
| 605 | Ablageboden |
| 606 | Ablageboden |
| 607 | Multiplexer |
| 608 | Verbindungskabel |
| 609 | Verbindungskabel |
| 610 | Verbindungskabel |
| 611 | Verbindungskabel |
| 612 | Ablageboden |
| 613 | Ablageboden |
| 614 | Ablageboden |
| 615 | Ablageboden |
| 616 | Ablageboden |

**Patentansprüche**

1. Regal (1) oder Schrank mit wenigstens zwei Ablageböden (401, 402, 403, 404, 405), bei dem in jedem Ablageboden (401, 402, 403, 404, 405) wenigstens eine RFID-Antenne (102) bestehend aus wenigstens einem Antennenleiter (504) und einer Antennenabgleichschaltung (502) angeordnet ist,

- wobei das Regal oder der Schrank genau eine Schreib-/Leseeinheit (406) aufweist,
- wobei die genau eine Schreib-/Leseeinheit (406) sämtliche Antennen (102) in sämtlichen Ablageböden (401, 402, 403, 404, 405) des Regales (400) steuernd ausgebildet ist,
- wobei zwischen der Schreib-/Leseeinheit (406) und einer ersten Antenne in einem ersten Ablageboden (401) und zwischen sämtlichen Antennen (102, 102a, 102b, 102c, 102d, 102e, 102f, 102g, 102h) des Regales (1) jeweils genau ein Verbindungskabel (407, 408, 409, 410) mit genau einer Signalleitung vorgesehen ist, über das Signale übertragbar sind, wobei in jedem Ablageboden (401, 402, 403, 404, 405) ein Hochfrequenzschalter zwischen dem Verbindungskabel (407, 408, 409, 410) und der wenigstens einen Antenne (102, 102a, 102b, 102c, 102d, 102e, 102f, 102g, 102h) vorgesehen ist,
- wobei das Verbindungskabel (407, 408, 409, 410) als Koaxialkabel ausgebildet ist, derart, dass das Verbindungskabel eine einadrige Signalleitung und einen Schirm als Ground aufweist,

**dadurch gekennzeichnet ,**

- **dass** die Signalleitung gleichzeitig für eine DC-Spannungsversorgung für eine Funktionseinheit (500) vorgesehen ist,
- und **dass** die Funktionseinheit (500) aus

- einer Steuereinheit (508) mit einer CPU,
- einem Steuerempfänger und Steuersender (506),
- einem DC-Netzteil (507) zur Spannungsversorgung für verschiedene Funktionsblöcke,
- dem Hochfrequenzschalter für hochfrequente Modulationssignale, wobei der Hochfrequenzschalter eine Eingangsbuchse auf eine Ausgangsbuchse schaltet oder die Spannungsversorgung und ein Hochfrequenzträgersignal auf eine Antenne im Ablageboden schaltet,
- der Antennenabgleichschaltung (502) für die Antenne (102),
- einem Antennenschalter (503),
- einem Tiefpassfilter (509) zwischen der Ein- und Ausgangsbuchse zum Durchleiten der DC-Spannungsversorgung für die nachfolgenden Ablageböden

gebildet ist,
- wobei der Steuerempfänger und der Steuersender (506) mit der Steuereinheit CPU (508) kommunizieren und die Steuereinheit (508) einen Wechselschalter (505) steuert,
- wobei jeder Ablageboden (401, 402, 403, 404, 405) eine Funktionseinheit (500) aufweist,
- wobei die DC-Spannungsversorgung (507) und der Steuerempfänger und Steuersender (506) derart mit dem Wechselschalter (505) verbunden sind, dass sie in jeder Schaltstellung mit der Eingangsbuchse verbunden sind.

2. Regal oder Schrank nach Anspruch 1, **dadurch gekennzeichnet, dass** in jedem Ablageboden (401; 402; 403; 404; 405) wenigstens zwei Antennen (102, 102a, 102b, 102c, 102d, 102e, 102f, 102g, 102h) angeordnet sind.

3. Regal oder Schrank nach Anspruch 1 oder 2, **dadurch gekennzeichnet, dass** das Verbindungskabel (407, 408, 409, 410) für die DC-Spannungsversorgung und die Übertragung von Hochfrequenzsignalen und für die Übertragung der Steuersignale für eine oder mehrere Funktionseinheiten ausgebildet ist.

4. Regal oder Schrank nach einem der vorhergehenden Ansprüche, **dadurch gekennzeichnet, dass** die Verbindung der genau einen Schreib-/Leseeinheit (406) und sämtlicher RFID-Antennen (102, 102a, 102b, 102c, 102d, 102e, 102f, 102g, 102h) des Regales (1) mit dem genau einen Verbindungskabel (407, 408, 409, 410) als sequenzielle Verbindung ausgebildet ist.

5. Regal oder Schrank nach einem der vorhergehenden Ansprüche, **dadurch gekennzeichnet, dass** jeder Ablageboden (401, 402, 403, 404, 405) jeweils genau einen Eingang und einen Ausgang (413, 414, 415, 416, 417, 418, 419, 420) zum Anschließen des Verbindungskabels (407, 408, 409, 410) aufweist.

6. Regal oder Schrank nach einem der vorhergehenden Ansprüche, **dadurch gekennzeichnet, dass** die von der Schreib-/Leseeinheit (406) gesendeten Signale aus einem Hochfrequenzträgersignal und/oder Kommunikationsprotokollen zu Transpondern und/oder Steuerungsprotokollen und/oder Steuerungsinformationen für verschiedene Funktionseinheiten gebildet sind.

7. Regal oder Schrank nach einem der vorhergehenden Ansprüche, **dadurch gekennzeichnet, dass** die von der Schreib-/Leseeinheit (406) gesendeten Signale als Signale mit derselben Modulation wie Signale, die zur Kommunikation mit Transpondern verwendbar sind, ausgebildet sind.

**8.** Regal oder Schrank nach Anspruch 1, **dadurch gekennzeichnet, dass** die Funktionseinheit (500) aus genau einer Leiterplatte gebildet ist.

**9.** Regal oder Schrank nach einem der vorhergehenden Ansprüche, **dadurch gekennzeichnet, dass** jede Antenne (401, 402, 403, 404) einen Antennenschalter (503) aufweist, um einen Antennenleiter (504) der Antenne (401, 402, 403, 404) bei Nichtbenutzung der Antenne (401, 402, 403, 404) zu unterbrechen.

**10.** Regal oder Schrank nach Anspruch 9, **dadurch gekennzeichnet, dass** von mehreren benachbarten Antennen (401, 402, 403, 404) genau ein Antennenschalter (503) geschlossen ist.

**11.** Regal- oder Schrankanordnung mit wenigstens zwei Regalen oder Schränken, **dadurch gekennzeichnet, dass** wenigstens ein Regal (400) oder wenigstens ein Schrank mit den Merkmalen zumindest eines der Ansprüche 1 bis 10 vorgesehen ist.

**12.** Regal- oder Schrankanordnung nach Anspruch 11, **dadurch gekennzeichnet, dass** sämtliche Regale (400) oder Schränke mit den Merkmalen zumindest eines der Ansprüche 1 bis 10 vorgesehen sind.

**Claims**

**1.** Rack (1) or cupboard comprising at least two storage shelves (401, 402, 403, 404, 405), in which at least one RFID antenna (102), consisting of at least one antenna conductor (504) and an antenna balancing circuit (502), is arranged in each storage shelf (401, 402, 403, 404, 405),

- wherein the rack or cupboard has exactly one writing/reading unit (406),
- wherein the exactly one writing/reading unit (406) is configured so as to control all the antennae (102) in all the storage shelves (401, 402, 403, 404, 405) of the rack (400),
- wherein, between the writing/reading unit (406) and a first antenna in a first storage shelf (401), and between all the antennae (102, 102a, 102b, 102c, 102d, 102e, 102f, 102g, 102h) of the rack (1), there is arranged in each case exactly one connection cable (407, 408, 409, 410) having exactly one signal line, by means of which signals can be transmitted, wherein a high-frequency switch is provided in each storage shelf (401, 402, 403, 404, 405) between the connection cable (407, 408, 409, 410) and the at least one antenna (102, 102a, 102b, 102c, 102d, 102e, 102f, 102g, 102h),
- wherein the connection cable (407, 408, 409, 410) is in the form of a coaxial cable, such that the connection cable has a single-wire signal line and a shield as the ground,

**characterised in that**

- the signal line is simultaneously provided for a DC power supply for a functional unit (500),
- and **in that** the functional unit (500) is formed of

- a control unit (508) having a CPU,
- a control receiver and a control transmitter (506),
- a DC power supply unit (507) for supplying power to various functional modules,
- the high-frequency switch for high-frequency modulation signals, wherein the high-frequency switch wires an input socket to an output socket or wires the power supply and a high-frequency carrier signal to an antenna in the storage shelf,
- the antenna balancing circuit (502) for the antenna (102),
- an antenna switch (503),
- a low-pass filter (509) between the input socket and output socket for conducting the DC power supply for the subsequent storage shelves,

- wherein the control receiver and the control transmitter (506) communicate with the control unit CPU (508), and the control unit (508) controls a changeover switch (505),
- wherein each storage shelf (401, 402, 403, 404, 405) has a functional unit (500),
- wherein the DC power supply (507) and the control receiver and control transmitter (506) are connected to the changeover switch (505) in such a way that they are connected to the input socket in every switching position.

**2.** Rack or cupboard according to claim 1, **characterised in that** at least two antennae (102, 102a, 102b, 102c, 102d, 102e, 102f, 102g, 102h) are arranged in each storage shelf (401; 402; 403; 404; 405).

**3.** Rack or cupboard according to either claim 1 or claim 2, **characterised in that** the connection cable (407, 408, 409, 410) is configured for the DC power supply and to transmit high-frequency signals and to transmit the control signals for one or more functional units.

**4.** Rack or cupboard according to any of the preceding claims, **characterised in that** the connection of the exactly one writing/reading unit (406) and all the RFID antennae (102, 102a, 102b, 102c, 102d, 102e, 102f, 102g, 102h) of the rack (1) to the exactly one connection cable (407, 408, 409, 410) is configured as a sequential connection.

5. Rack or cupboard according to any of the preceding claims, **characterised in that** each storage shelf (401, 402, 403, 404, 405) in each case has exactly one input and one output (413, 414, 415, 416, 417, 418, 419, 420) for connecting the connection cable (407, 408, 409, 410).

6. Rack or cupboard according to any of the preceding claims, **characterised in that** the signals sent by the writing/reading unit (406) are formed of a high-frequency carrier signal and/or communication protocols for transponders and/or control protocols and/or control information for various functional units.

7. Rack or cupboard according to any of the preceding claims, **characterised in that** the signals sent by the writing/reading unit (406) are in the form of signals having the same modulation as signals that can be used to communicate with transponders.

8. Rack or cupboard according to claim 1, **characterised in that** the functional unit (500) is formed of exactly one printed circuit board.

9. Rack or cupboard according to any of the preceding claims, **characterised in that** each antenna (401, 402, 403, 404) has an antenna switch (503) in order to disconnect an antenna conductor (504) of the antenna (401, 402, 403, 404) when the antenna (401, 402, 403, 404) is not in use.

10. Rack or cupboard according to claim 9, **characterised in that** exactly one antenna switch (503) is closed by a plurality of adjacent antennae (401, 402, 403, 404).

11. Rack arrangement or cupboard arrangement comprising at least two racks or cupboards, **characterised in that** at least one rack (400) or at least one cupboard having the features of at least one of claims 1 to 10 is provided.

12. Rack arrangement or cupboard arrangement according to claim 11, **characterised in that** all the racks (400) or cupboards are provided having the features of at least one of claims 1 to 10.

## Revendications

1. Étagère (1) ou armoire comportant au moins deux niveaux de rangement (401, 402, 403, 404, 405), dans laquelle, dans chaque niveau de rangement (401, 402, 403, 404, 405) est disposée au moins une antenne RFID (102) formée d'au moins un conducteur d'antenne (504 et d'un circuit d'équilibrage d'antenne (502)

- dans laquelle l'étagère ou armoire comporte précisément une seule unité de lecture/écriture (406),
- dans laquelle précisément ladite unité de lecture/écriture (406) contrôle toutes les antennes (102) des tous les niveaux de rangement (401, 402, 403, 404, 405) des étagères (400),
- dans laquelle entre l'unité d'écriture/lecture (406) et une première antenne d'une première étagère de rangement (401) et entre toutes les antennes (102, 102a, 102b, 102c, 102d, 102e, 102 f, 102g, 102h) de l'étagère (1) est prévu chaque fois précisément un seul câble de connexion (407, 408, 409, 410), avec précisément une ligne de signaux, par l'intermédiaire de laquelle des signaux peuvent être transmis, dans chaque clayette de stockage (401, 402, 403, 404, 405) un commutateur haute fréquence étant disposé entre le câble de connexion (407, 408, 409, 410) et l'au moins une antenne (102, 102a, 102b, 102c, 102d, 102e, 102f, 102g, 102h),
- dans laquelle le câble de raccordement (407, 408, 409, 410) est réalisé sous la forme d'un câble coaxial Koa25, de sorte que le câble de raccordement présente une ligne de signal monoconducteur et un blindage formant masse,

**caractérisé en ce que**

- la ligne de signaux est également destinée à une alimentation en courant continu d'une unité fonctionnelle (500),
et **en ce que** l'unité fonctionnelle (500) est formée

- d'une unité de contrôle (508) avec une CPU,
- d'une unité de commande et d'un émetteur de commande (506),
- d'un bloc d'alimentation en courant continu (507) pour l'alimentation en tension des différents blocs fonction,
- du commutateur haute fréquence pour émettre des signaux de modulation haute fréquence, où le commutateur haute fréquence commute une prise d'entrée sur une prise de sortie ou commute l'alimentation en courant et un signal porteur haute fréquence sur une antenne d'un niveau de rangement,
- du circuit d'équilibrage d'antenne (502) pour l'antenne (102),
- d'un commutateur d'antenne (503),
- d'un filtre passe-bas (509) entre la prise d'entrée et de sortie pour interconnecter l'alimentation en courant continu des niveaux de rangement suivants,

- dans lequel le récepteur de commande et l'émetteur de commande (506) communiquent avec l'unité de commande CPU (508) et l'unité de commande (508) commande un inverseur (505),
- dans lequel chaque niveau de rangement (401, 402, 403, 404, 405) comporte une unité fonctionnelle (500),
- dans lequel l'alimentation en courant continu (507) et le récepteur de commande et l'émetteur de commande (506) sont connectés au commutateur (505) de manière qu'ils soient connectés à la prise d'entrée dans chaque position de commutation.

2. Etagère ou armoire selon la revendication 1, **caractérisé en ce que** dans chaque niveau de rangement (401, 402, 403, 404, 405) sont disposées au moins deux antennes (102, 102a, 102b, 102c, 102d, 102e, 102f, 102g, 102h).

3. Etagère ou armoire selon la revendication 1 ou 2, **caractérisé en ce que** le câble de liaison (407, 408, 409, 410) est conçue pour l'alimentation en courant continu et la transmission des signaux haute fréquence et pour la transmission des signaux de commande pour une ou plusieurs unités fonctionnelles.

4. Etagère ou armoire selon l'une des revendications précédentes, **caractérisé en ce que** le raccordement d'une seule unité de lecture/écriture (406) et de toutes les antennes RFID5 (102, 102a, 102b, 102c, 102d, 102e, 102f, 102g, 102h) de l'étagère (1) avec précisément le seul câble de connexion (407, 408, 409, 410) est conçu comme une connexion séquentielle.

5. Étagère ou armoire selon l'une des revendications précédentes, **caractérisé en ce que** chaque niveau de rangement (401, 402, 403, 404, 405) comporte chacune précisément une seule entrée et une seule sortie (413, 414, 415, 416, 417, 418, 419, 420) pour le raccordement du câble de raccordement (407, 408, 409,410).

6. Etagère ou armoire selon l'une des revendications précédentes, **caractérisé en ce que** les signaux émis par l'unité de lecture/écriture (406) sont formés d'un signal porteur haute fréquence et/ou de protocoles de communication vers des transpondeurs et/ou des protocoles de contrôle et/ou des informations de contrôle pour différentes unités fonctionnelles.

7. Étagère ou armoire selon l'une des revendications précédentes, **caractérisé en ce que** les signaux émis par l'unité d'écriture/lecture (406) sont formés de signaux donnant lieu à la même modulation que des signaux pouvant être utilisés pour communier avec les transpondeurs.

8. Etagère ou armoire selon la revendication 1, **caractérisé en ce que** l'unité fonctionnelle (500) est formé précisément d'un seul circuit imprimé.

9. Etagère ou armoire selon l'une des revendications précédentes, **caractérisé en ce que** chaque antenne (401, 402, 403, 404) comporte un commutateur d'antenne (503) pour interrompre un conducteur d'antenne (504) de l'antenne (401, 402, 403, 404) lorsque l'antenne (401, 402, 403, 404) n'est pas utilisée

10. Etagère ou armoire selon la revendication 9, **caractérisé en ce que** parmi plusieurs antennes adjacentes (401, 402, 403, 404), précisément un commutateur d'antenne (503) est fermé.

11. Agencement d'étagères ou d'armoires comportant au moins deux étagères ou armoires, **caractérisé en ce qu'**il comporte au moins une étagère (400) ou au moins une armoire présentant les caractéristiques selon au moins l'une des revendications 1 à 10.

12. Agencement d'étagères ou d'armoires selon la revendication 11, **caractérisé en ce que** toutes les étagères (400) ou armoires présentent les caractéristiques selon au moins l'une des revendications 1 à 10.

**Fig.1**

**Fig. 2**

**Fig. 3**

**Fig. 4**

**Fig. 5**

**Fig. 6**

Fig. 7

605    606    600

602    Regal 3    Regal 4    603

400    Regal 1    Regal 2    601

401    604

## Fig. 8

405    616    600

404    615

403    614    601

400    402    613    401

401    612

602    603

609    608    610    611    603

607    406

## Fig. 9

**IN DER BESCHREIBUNG AUFGEFÜHRTE DOKUMENTE**

**In der Beschreibung aufgeführte Patentdokumente**

- EP 1785913 A2
- US 20060232382 A1
- DE 102004050089 A1
- US 20160034732 A1
- US 20150235066 A1
- US 20120056720 A1